# EUROPEAN PATENT APPLICATION

(11) **EP 2 955 369 A1**
(43) Date of publication of application: **16.12.2015**
(21) Application number: 14172243.9
(22) Date of filing: 12.06.2014
(51) Int. Cl.: F03D 3/06

(54) **Flow conversion device**

(71) Applicant: Ostojic, Vladislav, 37242 Stopanja (RS); Gromilic, Sanja, 37242 Stopanja (RS)
(72) Inventor: Ostojic, Vladislav, 37242 Stopanja (RS); Gromilic, Sanja, 37242 Stopanja (RS)

(57) **Abstract**

A flow conversion device (1) for generating power from a fluid flow comprises a shaft (2), which is suitable for being positioned in the fluid flow, a base element (3) attached to the shaft (2) in such a manner that the shaft (2) forms an axis of rotation (15) for the base element (3). The base element (3) comprises a first surface (4) and a second surface (5) arranged opposite to the first surface (4). A plurality of vane elements (6, 7, 8, 9) is arranged on the first surface (4). The first surface (4) comprises a planar portion which is formed by a normal plane to the axis of rotation (15). The vane elements (6, 7, 8, 9) are mounted on support elements (11, 12, 13, 14). At least some of the support elements are disposed with an axis (21, 22, 23, 24) extending in normal direction to the planar portion of the first surface. The vane elements (6, 7, 8, 9) are pivotable around the axis between a first radial position and a second, substantially tangential position.

## Description

The invention relates to a flow conversion device. Such a flow conversion device can be used for a power plant for generating electrical energy or as a drive mechanism for converting the energy of fluid flow into mechanical energy.

Conventional water wheels have been in use for centuries to transform the potential or kinetic energy of a water stream into mechanical work. A conventional water wheel is usually composed of an annular arrangement of a number of vanes which extend into the flowing water. The flowing water exerts a pressure onto the surface of the vanes. The pressure exerts a force onto the surface of the vanes which can be transformed into a rotary movement of a shaft which is connected to the annular arrangement of vanes.

An example of a prior art flow conversion device is shown in the document US2012280508A1. This document shows a hydro generator comprising a hollow blade turbine, which rotates about a horizontal axis and is partially immersed in a flowing water stream, such as a river. The rotary movement of the hollow blade turbine is used for powering an electrical generator. A transmission is foreseen to increase the speed of the rotational movement of the shaft of the hollow blade turbine twofold. A further transmission may be required for increasing the rotational speed further to power an electrical generator. However, due to the fact the hollow blade turbine performs less than one complete rotation per second, the diameter of the apparatus has to be in the range of a meter or more to generate a sufficient angular moment for generating sufficient power to economically operate a generator. The required size of the hollow blade turbine involves a heavy construction thereby reducing efficiency of operation.

As an alternative example, it has been contemplated in the document GB 289499 to use wave energy or the flow of a river to drive an apparatus for generating power. This apparatus consists of a vertical shaft, which is positioned in a bed of flowing water, such as a river. The vertical shaft is supported at its lower end in a bearing 2 fixed on the ground, e.g. the river bed. Furthermore the upper end of the shaft is supported rotatably in a fixed structure comprising an upper bearing 3. The shaft 1 can perform a rotation about its vertical axis. A number of blades 10 are attached to the shaft. Each of these blades is attached to a horizontal arm by a pivot 15. Each of the blades 10 is depending from the horizontal arm so as to be suspended in the water. Each of the blades can perform a pivotal movement around the pivot 15.

The horizontal arms carrying the blades are kept in a position on or slightly above the surface of the water by a buoy 4. This arrangement has thus the advantage of compensating the weight of the blades, support arms and shaft by the buoyancy of the buoy. For this reason, the efficiency of transmission may be increased as compared to the solution shown in US2012280508A1.

The blades have a front face and a rear face. If a force is applied to the front face of the blade, the blade pivots around the pivot axis from a substantially vertical position into a substantially horizontal position. If a force is applied to the rear face of the blade, the blade is barred from pivoting around the pivot axis by a stop. The stop can be a vertical bar which is fixed in a vertical position to the horizontal arm. Therefore the force applied onto the rear face of the blade pushes the blade around the vertical axis of the shaft. As there is a plurality of blades arranged circumferentially around the vertical axis of the shaft, at least one of these blades is pushed by the force of the moving water and thereby causes the rotary shaft to rotate around its vertical axis. The rotation of the shaft can be transmitted to a generator for generating power.

The apparatus of GB 289499 works well if the water flows through a channel and extends over the entire width of this channel. If the river is used for traffic and for the free movement of water-bound mammals, a separate channel without any obstructions is required. Thus in order to provide for a device which takes account of such environmental issues, a separate system of water channels may be required. Considerable resources in territory have to be available for such a solution and considerable earthworks to build such a separate system of channels may be required.

The device for generating power from a the flow of a river or from waves such as a water wheel according to the prior art comprises a drive, a rotary shaft, a transmission to transmit the rotation or oscillation of the drive to the rotary shaft, an eccentric mass attached to the rotary shaft, the eccentric mass performing a rotary movement around the axis of the rotary shaft. The rotary movement can generate the necessary rotational speed of the shaft for driving a generator to generate electrical energy.

A disadvantage of such a water wheel is its inefficiency. Due to the fact that only a fraction of the vanes are immersed into the flowing water, only a fraction of the possible vane surface can be used for the transformation of the flow into a rotary motion of the shaft.

For improving the operation of flow conversion devices for energy generation in a hydroelectric power plant, Francis turbines, Kaplan turbines and other turbines have been invented. Such turbines have vanes which are typically immersed in water, such that all vanes may be subjected to water pressure whereby an increase in efficiency is obtainable.

It is therefore an object of the invention to propose a device for which environmental impact for generating power is reduced. A further object of the invention is to power a generator for generating electrical energy. It is a further object of the invention to provide a flow conversion device which can be immersed in water to allow for energy generation from slow moving or small water streams.

A flow conversion device for generating power from a the flow of a river or from waves comprises a shaft, which is suitable for being positioned in a bed of flowing water, such as a river, a base element attached to the shaft in such a manner that the shaft forms an axis of rotation for the base element. The base element comprises a first surface and a second surface arranged opposite to the first surface. In particular the base element can be shaped as a base element. A plurality of vane elements are arranged on the first surface, whereby the first surface comprises a planar portion which is formed by a normal plane to the axis of rotation. The vane elements are mounted on support elements whereby at least some of the support elements are disposed with an axis extending in normal direction to the planar portion of the first surface. The vane elements are pivotable around the axis between a first radial position and a second, substantially tangential position.

According to an embodiment, each of the vane elements has a first end and a second end whereby the first end comprises a fixing member for fixing the vane element to the corresponding support element. The fixing of the vane element to the corresponding support element is reversible, thus almost no force is needed to separate the vane element from the corresponding support element again.

A stop or a fixing member can be provided to keep the second end in the second, substantially radial position under exertion of fluid pressure.

According to an embodiment, the support elements are arranged in an annular area extending from the outer circumference of the base element having a radius r1 to a radius r2, whereby the ratio of r2/r1 is at least 0.5 and less than 1.

According to an embodiment, the fixing members are arranged in an annular area of the base element are arranged having a radius r12 which lies then between r11 and r12min, whereby the ratio of r12/r11 is at least 0.5 and less than 1.

According to an embodiment, the stops are arranged in an annular area of the base element extending from a radius r3 forming the outer circumference of the shaft to a radius r4 being greater than r3 but less than r2.

According to an embodiment, of the flow conversion device is connectable to a generator for the generation of electrical energy or to a transmission. According to an embodiment, the shaft has an axis of rotation, which is substantially vertical. According to an alternative embodiment, the shaft has an axis of rotation, which is substantially horizontal.

According to an embodiment, least two vane elements can provided on the base element. Furthermore a plurality of vane elements can be arranged on the second surface. Thus either the first surface or the second surface or both of the first and second surfaces are provided with a plurality of vane elements. The plurality of vane elements can comprise four vane elements which are arranged on the base element such that the support element is arranged at the circumference of the base element or close to the circumference of the base element. Each of the vane elements is pivotable about the axis of the support element. The axis of the support element preferably extends normally to the base element. Each of the vane elements is attached on its first end to the support element and can be pivoted from a radial position into a tangential position. A radial position is defined such that the first end and the second end are arranged on the plate in the following way: a hypothetical straight line connecting the first end with the second end is directed from the support element to the axis of rotation of the shaft or to a proximal area close to the axis of rotation of the shaft. The area has a radius of at most three times of the radius of the shaft. Thus the vane element according to this embodiment is supported by a support element which is arranged at or close to the circumference of the base element. The vane element performs a rotary movement around the support element such that it can assume a tangential position with respect to the circumference of the base element.

In case the base element is of rectangular cross-section, the radius of the base element becomes a half-width of such a base element or half a diagonal of such a base element.

The vane element can have a length, which extends from the support element to the proximal area of the axis of rotation of the shaft, thus a length which corresponds roughly to the radius of the base element or the half-width of the base element. In an embodiment, the length of the vane element can be a fraction of the radius or the half width of the base element. Thereby a plurality of vane elements can be arranged along the distance between the axis of the shaft and any support element. In other words a plurality of vane elements can be arranged radially in a serial arrangement.

The surface area of such a vane element is smaller than the surface area of a vane element extending from the support element at the circumference to the axis of the shaft. Smaller vane elements require less energy to set them into motion, therefore the. It is possible to restrict the movement of the vane elements by additional fixing members.

At least some of the vane elements can be hollow or can contain hollow spaces. According to an embodiment the base element may be hollow or contains hollow spaces. Alternatively a buoy may be attached to the flow conversion device to keep it in a floating position during operation. Accordingly a system comprising an anchoring means can be provided for fixing the flow conversion device to the ground. The ground can be formed by at least one of a base of a channel, a pipeline, a tube a river bed, a lake bed, a sea bed.

The flow conversion device according to any of the preceding embodiments can be used for the generation of electrical energy or for the performance of work, in particular mechanical work. The flow conversion device according to any of the preceding claims can be used in a toy or can be a toy.

A method for operating a flow conversion device arranged in a flowing fluid medium, such as a river whereby in a first step a rotary movement of a shaft is initiated by rotation of a base element attached the shaft around an axis of rotation extending through the shaft. The base element comprises a first surface and a second surface arranged opposite to the first surface. A plurality of vane elements are arranged on the first surface, whereby the first surface comprises a planar portion which is formed by a normal plane to the axis of rotation, whereby the vane elements are mounted on support elements whereby at least some of the support elements are disposed with an axis extending in normal direction to the planar portion of the first surface, characterized in that the vane element is pivoted around the axis from a first radial position and a second, substantially tangential position at latest when it reaches a downstream position in the fluid flow, and the vane element is pivoted around the axis from a second, substantially tangential position to a first radial position at latest when it reaches an upstream position in the fluid flow.

The description as well as the embodiments disclosed serve only as examples explaining the structure and mode of operation of the invention. Further advantageous embodiments are disclosed in the dependent claims as well as in the drawings. In addition single features of the embodiments described or shown in the drawings can be combined in any arbitrary manner.

The moving fluid, which can be a liquid or a gas, has a kinetic energy, depending on the velocity of the flowing fluid. The flow conversion device transforms the kinetic energy into mechanical work by rotation of the vane elements around an axis of rotation which can be configured as a rotatable shaft. The mechanical work generated thereby is later used for different purposes, such as to run different devices, e.g. a generator for generating electricity. During the rotary movement of the flow conversion device, the vane elements are arranged in different angles with respect to the direction of fluid flow. In addition to the change of position due to the rotary movement of the base element, the vane elements change their position with respect to the main direction of fluid flow due to their pivoting movement and due to the rotation of the base element.

Such vane elements can also have the shape of fins.

One advantage of the flow conversion device according to the invention compared to the devices known in the prior art is that it does not require an expensive infrastructure, such as a dam for providing a water reservoir and a difference in liquid level to transform the potential energy to kinetic energy for driving a turbine.

Another advantage is that the flow conversion device according to the invention consumes less space and does not interfere with the normal flow of the fluid medium.

According to an embodiment of the invention the vanes and/or the base element of the flow conversion device are hollow. In this configuration they have a lower specific weight than the fluid medium in which they are embedded or immersed. In order to counteract the effect of buoyancy the flow conversion device is tied to the ground e.g. by an anchoring means. The buoyancy force acting in upward direction thereby stabilizes the flow conversion device in its position. The vanes can have a hollow space, which may be filled with air or another gas.

As an example the flow conversion device can be used conversion of underwater sea movement in electricity. Fish can pass the flow conversion device, due to the fact that a space is provided between the vanes.

In an embodiment the flow conversion device can be covered with a wire rack, for example, which would protect the fish, birds, that is the animals around the work area of the flow conversion device.

In operation, the flow conversion device is submerged in a gas or liquid flow. The base element is set into motion by the vanes performing their pivotal movement around their respective support elements. In case of an arrangement of four vane elements one of the vane elements is in the upstream position, a second one of the vane elements in the rotation inducement position, a third one of the vane elements in the downstream position and a fourth one of the vane elements in the return position. The upstream position corresponds to an angle of zero degrees with respect to the direction of fluid flow. The rotation inducement position corresponds to an angle of 90 degrees with respect to the direction of fluid flow. The downstream position corresponds to an angle of 180 degrees with respect to the direction of fluid flow. The return position corresponds to an angle of 270 degrees with respect to the direction of fluid flow.

When the vane surface is positioned in a substantially normal direction to the direction of fluid flow in the rotation inducement position, the fluid flow acting on the vane surface sets the flow conversion device into rotation. Therefore this position is called the rotation inducement position. The vane element moves further into its downstream position. The vane element extends radially outwardly from the base element. In its downstream position the vane element floats freely in the fluid flow. At the same time the subsequent vane element arrives in its rotation inducement position. Fluid flow pushes the subsequent vane element into its downstream position. The first vane element has in the meantime reached its return position. The vane element floats freely in the fluid flow and is positioned tangentially with respect to the base element. The base element rotates further so that the first vane element reaches the upstream position again. In this position the second end of the vane elements is supported by the support element again. The cycle starts again, thus the flow conversion device continues to perform its rotary movement about the shaft until the fluid flow is stopped. A motor or generator of electricity can be attached to the shaft.

Thereby the kinetic energy present in the fluid flow is transformed into a rotational movement. All parts of the flow conversion device have a resistance to the movement of fluid flow. The resistance of all but one part, namely the vane elements is constant. Due to the fact that the surface area exposed to fluid flow changes with the position of each vane element, the resistance of the vane element is variable, depending on its location. The resistance in the rotation inducement position is thus higher than in any other position of the vane element. This resistance is a pressure force acting on the front surface of the vane element. Due to the fact that a pressure acts on the vane element in this position creating a pressure force. A reaction force is not present, consequently an angular momentum is induced on the flow conversion device, which is set into motion by this angular momentum. Due to the fact that any of the vane elements creates this angular momentum upon moving into the rotation inducement position, the flow conversion device keeps rotating about its axis of rotation of the shaft.

The energy output of the flow conversion device is obtained by adding the forces which act on the vane element or the vane elements in particular in the rotation inducement position. Therefore the vane elements are required to have an asymmetric shape.

If the vane elements had the the shape of ball, there would be no difference in forces as the force of fluid flow which would apply onto the vane in the rotation inducement position, would also apply onto the vane element in the return position. These two forces create each an angular momentum. The direction of angular momentum of one vane element is opposed to the angular momentum of the other vane element. In this scenario the flow conversion device would not rotate. In other words, regardless of the position of the ball, the ball has the same resistance to fluid flow and the forces acting on it are the same, which due to its round shape presents the same surface along the prospective path through the fluid flow. Therefore it's an essential feature of the invention that the shape of the vane elements is asymmetric. Thereby the forces acting on the vane element in the rotation inducement position and the return position are not the same and the force acting on the vane element in the rotation inducement position is larger than the force acting on the vane element in the return position.

If the shape of the vane element for instance corresponds to the shape of a teaspoon, by turning it around the shape exposed to fluid flow will be variable and consequently will have different resistance to fluid flow. When the vane elements rotate and change position, they are susceptible to perform work. When the vane elements are in such a position that their smallest surface is exposed to the fluid flow, the work performed is much smaller than the work performed of a vane element exposing its largest surface to fluid flow. The work generated for driving the shaft and any device attached thereto, such a generator or a motor depends on the difference between the work performed at the rotation inducement position with respect to the work performed in the return position. The difference between the two forces also determines in which direction the flow conversion device is rotating.

The vane elements are attached to the base element by the support elements placed on the circumference of the base element. The first end of the vane elements is disposed with an attachment element which is coupled to the support element. The second end of the vane elements is in the rotation inducement position movable only up to the fixing member. From the rotation inducement position until the downstream position, the vane element moves together with the base element. The maximum pressure force is applied on the surface of the vane element during this movement for most a quarter of a circle.

In the downstream position or shortly thereafter, the vane element will most likely orient itself radially outwardly, so as to provide minimal resistance to fluid flow. When passing the downstream position, the pressure force acts on the opposite side of the vane element. Due to the fact that the vane element is freely movable in a direction away from the fixing member, the vane element will rotate outwardly to obtain a radially outwardly position extending over the edge of the base element. When proceeding to the return position the vane element remains in its stable position, that means exposing its smallest surface to fluid flow. Due to the fact that the vane element is attached to the support element, the vane element will assume a position downstream of the support element. When arriving in the return position, the vane element thus assumes a tangential position with respect to the circumference of the base element. In the upstream position, the vane element assumes a radial position and the second end of the vane elements comes to rest on the fixing member.

The invention will be explained in more detail in the following with reference to the drawings. There are shown in a schematic representation:
Fig. 1 shows a first embodiment of the flow conversion device according to the invention,
Fig. 2 shows a vane element of the embodiment of Fig. 1,
Fig. 3 shows the vane element of Fig. 2 in another view,
Fig. 4 shows a vane element which is about to be mounted onto the base element,
Fig. 5 shows the vane element of Fig. 4 in its mounted position,
Fig. 6 shows the flow conversion device of Fig. 1 in a view from above,
Fig. 7 shows a flow conversion device according to a second embodiment,
Fig. 8 shows the flow conversion device of Fig. 7 in a view from above,
Fig. 9 shows the flow conversion device according to Fig. 1-6 in a fluid flow,
Fig. 10 shows a stack of flow conversion devices,
Fig. 11 shows a flow conversion device with hollow vane elements.

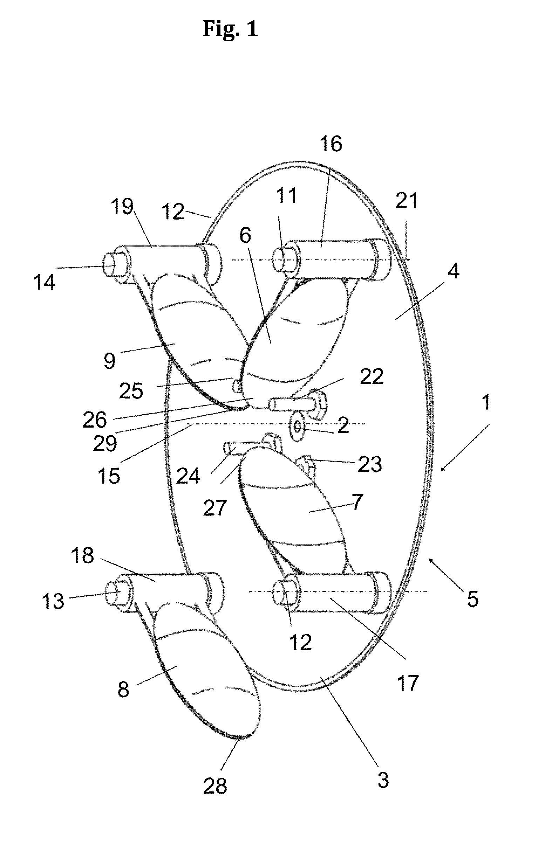

Fig. 1 shows a flow conversion device 1 for generating power from a fluid flow, such as the flow of a river or from waves, comprising a shaft 2, which is suitable for being positioned in the fluid flow, a base element 3 attached to the shaft 2 in such a manner that the shaft 2 forms an axis of rotation 15 for the base element 3. The base element 3 comprises a first surface 4 and a second surface 5 arranged opposite to the first surface 4. A plurality of vane elements 6, 7, 8, 9 are arranged on the first surface 4. The first surface 4 comprises a planar portion which is formed by a normal plane to the axis of rotation. The vane elements 6, 7, 8, 9 are mounted on support elements 11, 12, 13, 14, whereby at least some of the support elements are disposed with an axis extending in normal direction to the planar portion of the first surface. The vane elements 6, 7, 8, 9 are pivotable around the axis between a first radial position and a second, substantially tangential position.

Each of the vane elements 6, 7, 8, 9 has a first end 16, 17, 18, 19 and a second end 26, 27, 28, 29 whereby the first end 16, 17, 18, 19 comprises a fixing member 22, 23, 24, 25 for fixing the position of the vane element to the corresponding support element. The stop or fixing member is provided to keep the second end 26, 27, 28, 29 of the respective vane element elements 6, 7, 8, 9 in the second, substantially radial position under exertion of fluid pressure.

The support elements are arranged in an annular area extending from the outer circumference of the base element having a radius r1 to a radius r2, whereby the ratio of r2/r1 is at least 0.5 and less than 1.

The fixing members are arranged in an annular area of the base element extending from a radius r3 forming the outer circumference of the shaft to a radius r4 being greater than r3 but less than r2.

The shaft 2 of the flow conversion device is connectable to a generator for the generation of electrical energy or to a transmission. According to an embodiment, the shaft 2 has an axis of rotation, which is substantially vertical. According to an alternative embodiment, the shaft 2 has an axis of rotation, which is substantially horizontal.

At least two vane elements are provided on the base element. Furthermore a plurality of vane elements is arranged on the second surface 5. Thus either the first surface or the second surface or both of the first and second surfaces are provided with a plurality of vane elements.

A method for operating a flow conversion device 1 comprises the step of initiating a rotary movement of a shaft 2 by rotation of a base element 3 attached to the shaft 2 around an axis of rotation 15 extending through the shaft. The base element 3 comprises a first surface 4 and a second surface 5 arranged opposite to the first surface 4. A plurality of vane elements 6, 7, 8, 9 are arranged on the first surface 4, whereby the first surface 4 comprises a planar portion which is formed by a normal plane to the axis of rotation. The vane elements 6, 7, 8, 9 are mounted on support elements 11, 12, 13, 14, whereby at least some of the support elements are disposed with an axis 21, 22, 23, 24 extending in normal direction to the planar portion of the first surface. The vane element 6 is pivoted around the axis from a first radial position 16 and a second, substantially tangential position 26 at latest when it reaches a downstream position in the fluid flow, and the vane element 8 is pivoted around the axis 13 from a second, substantially tangential position 26 to a first radial position 16 at latest when it reaches an upstream position in the fluid flow.

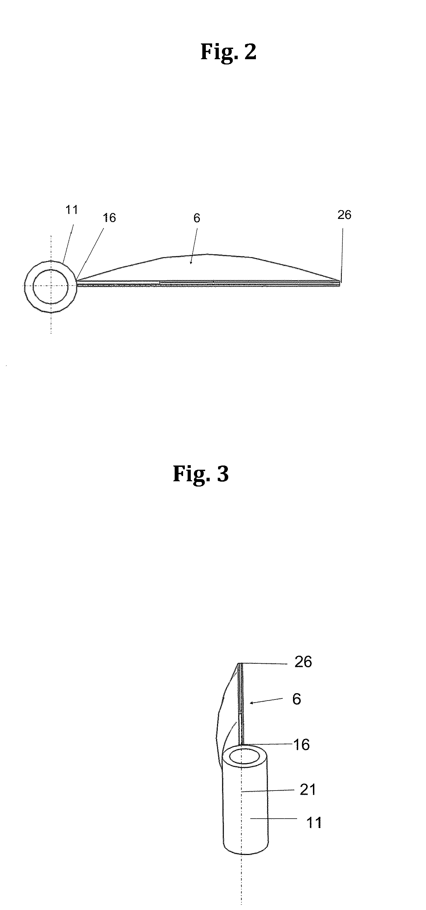

Fig. 2 shows a vane element and a holder for the support element, for example the vane element 6 and the support element 11. The vane element has a first end 16 and a second end 26. The vane element 6 has a convex upper side and a concave lower side. The concave side is exposed to fluid flow when the vane element is in the rotation inducement position. The holder for the support element is a hollow cylinder which is mounted on the corresponding support element 11 in such a manner that the vane element is rotatable movable about the axis 12 of the support element 11.

Fig. 3 shows the vane element 6 of Fig. 2 in a view from the holder of the support element 11. The vane element 6 is fixedly attached to the support element.

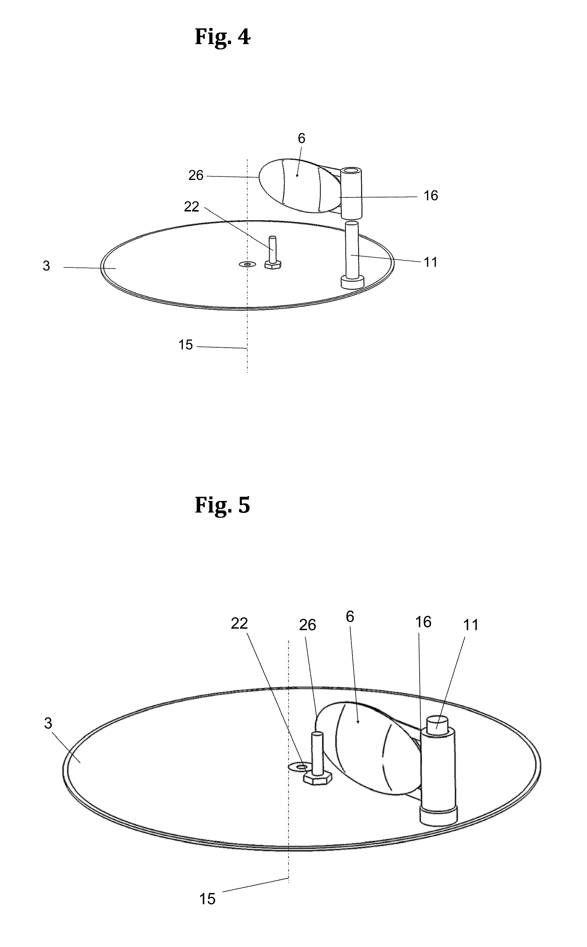

Fig. 4 shows a vane element 6 which is about to be mounted onto the base element 3. There is only one vane element shown, however more than one vane element may be foreseen according to any of the embodiments shown. The vane element 6 has a first end 16 and a second end 26. The first end is disposed with a hollow cylinder. The hollow cylinder has an inner diameter which just fits on the outer diameter of the support element 11. The support element 11 is fixed to the base element 3. Furthermore a fixing member 22 is fixed close to the axis 15 of the shaft.

The second end 26 of the vane element 6 is in the mounted position closer to the axis 15 than the fixing member 22. The fixing member 22 is used to stop the movement of the vane element in a radial position.

Fig. 5 shows the vane element of Fig. 4 in its mounted position. The vane element 6 is mounted on the support element. The hollow cylindrical holder of the first end 16 of the vane element 6 fits on the support element which has the shape of a cylinder. Other types of attachment means are also contemplated. The holder could be formed as a clip which is snapped onto the support element 11. The support element could be disposed with a cap or could comprise a screw which could be screwed onto the upper end of the support element in order to prevent that the vane element is detached accidentally from the support element as a consequence of e.g. an irregularity in the flow characteristics of the fluid flow. Therefore the upper end of the support element could comprise a screw thread. The vane element is shown in a position in which is close to the fixing member 22. The fixing member is shown as a cylindrical bar, however it could have any other geometrical shape as long as the vane element is retained in its position when a pressure force acts on the concave surface of the vane element. The concave surface is opposite the convex surface shown in Fig. 5. The concave surface is invisible in Fig. 5.

The vane elements are the only elements, whose resistance to fluid flow substantially changes. The fluid flow affects all parts of the flow conversion device, however for all parts with exception of the vane elements the pressure force resulting from fluid flow acts always with the same intensity upon these parts, for example the base element, the support elements or the fixing members. All these parts of the flow conversion device 1 have always the same resistance to fluid flow. The only parts that do not have same resistance to fluid flow are the vane elements 6, 7, 8, 9. The amount of the resistance of the vane elements depends on their position, the amount of resistance changes with their position during the rotational movement of the base element. Thus the resistance depends directly on the surface with which the vane elements are exposed to fluid flow. The vane elements can have any arbitrary shape, which depends on the design of the base element, the support elements and the fixing members. In the embodiment pictured in Fig. 1 to Fig. 11 the vane elements have the shape of a teaspoon. They are set at a right angle upright if the base element 3 is arranged in horizontal position, however their angle and number depends on the design, as well as the attachment of the flow conversion device in the river bed, the shore or any other source of fluid flow which should be exploited by the vane elements.

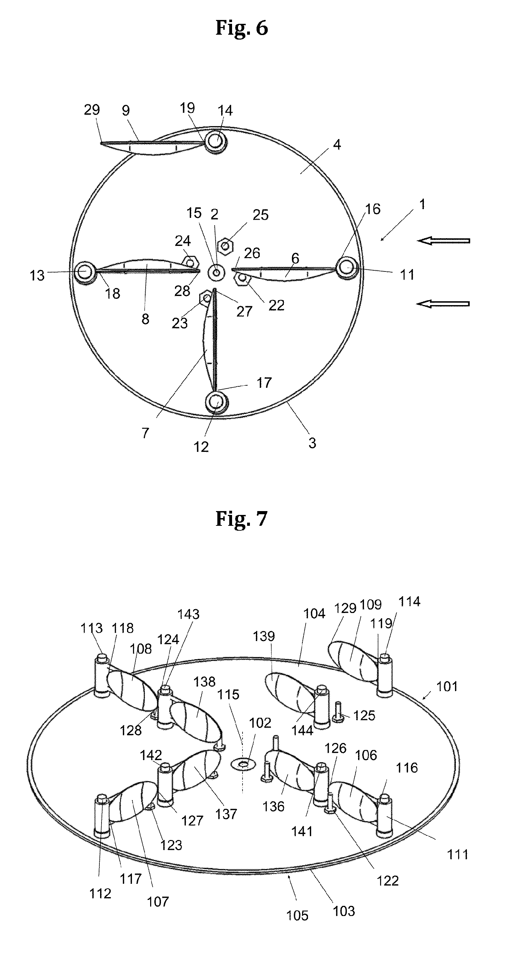

Fig. 6 shows the flow conversion device 1 in a view from above. In operation, the flow conversion device 1 is submerged in a gas or liquid flow. The fluid flow is represented by two arrows on the right side of Fig. 6. The vane element 6 is oriented in a radial arrangement, that means, that a straight line connecting the first end 16 with the second end 26 is the same or parallel to the radial line connecting the support element with the axis 15. The vane element 6 is thus in a position in which the smallest surface thereof is exposed to fluid flow. The second end 26 of vane element 6 may touch the fixing member 22 or it may be still loose. Thereby the vane element 6 presents only a minimal resistance to fluid flow. The vane element 6 is in the upstream position. The vane element 7 is also oriented in a radial arrangement. The second end of vane element 7 is supported by the fixing member 23. In this position the largest possible surface of the vane element 7 is exposed to fluid flow. Thereby a pressure force is generated on vane element 7 which induces an angular momentum starting a rotational movement of the base element about the axis 15. The vane element 8 is still in a radial arrangement as well. In this position, the smallest possible surface is exposed to fluid flow, thus only a small pressure force acts on the surface of vane element 8. The vane element 8 is shown with its second end 28 being still attached to the fixing member 24. This position is referred to as the downstream position. As the base element 3 continues its clockwise rotation, a pressure force will act upon the convex surface of the vane element 8. Due to the fact that there is no fixing member on the concave side of the vane element 8, the vane element 8 will start a rotational movement about the support element 13 in clockwise direction. The vane element moves until it reaches a stable position, which is a radial position in which the vane element 8 extends beyond the edge of the base element 3. In this position the vane element 8 forms a tail-like extension. The vane element 9 floats also freely in the fluid flow and assumes a tangential position. This position is referred to as the return position. The vane element 9 remains in Fig. 6 horizontal position when rotated clockwise until it reaches the upstream position again. Thus the support element 14 is exposed to fluid flow and the vane element with its first end 19 and second end 29 extends downstream with respect to the support element 14.

In operation, the base element 3 is set into motion by the vane elements 6, 7, 8, 9 performing their pivotal movement around their respective support elements 11, 12, 13, 14. In case of an arrangement of four vane elements, one of the vane elements 6 is in the upstream position, one vane element 7 in the rotation inducement position, one vane element 8 in the downstream position and one vane element 9 in the return position. The upstream position corresponds to an angle of zero degrees with respect to the direction of fluid flow. The rotation inducement position corresponds to an angle of 90 degrees with respect to the direction of fluid flow. The downstream position corresponds to an angle of 180 degrees with respect to the direction of fluid flow. The return position corresponds to an angle of 270 degrees with respect to the direction of fluid flow.

When the vane element surface is positioned in a substantially normal direction to the direction of fluid flow in the rotation inducement position, the fluid flow acting on the vane element surface sets the flow conversion device 1 into rotation. Therefore this position is called the rotation inducement position. The vane element 6 moves further into its downstream position. The vane element 6 extends radially outwardly from the base element as soon as the pressure force acting on the convex side of the vane element initiates a rotational movement around support element 13. In its downstream position the vane element 6 floats freely in the fluid flow. At the same time the subsequent vane element 7 arrives in its rotation inducement position. Fluid flow pushes the subsequent vane element 7 into its downstream position. The first vane element 6 has in the meantime reached its return position. The vane element 6 floats freely in the fluid flow and is positioned tangentially with respect to the circumference of the base element 3. The base element 3 rotates further so that the first vane element 6 reaches the upstream position again. In this position the second end of the vane element 6 is supported by the support element again. The cycle starts again, thus the flow conversion device continues to perform its rotary movement about the shaft 2 until the fluid flow is stopped. A motor or generator of electricity can be attached to the shaft which is not shown in the drawings.

Fig. 7 shows a second embodiment flow conversion device 101. The flow conversion device 101 for generating power from a fluid flow, such as the flow of a river or from waves, comprises a shaft 102, which is suitable for being positioned in the fluid flow, a base element 103 attached to the shaft 102 in such a manner that the shaft 102 forms an axis of rotation 115 for the base element 103. The base element 103 comprises a first surface 104 and a second surface 105 arranged opposite to the first surface 104. A plurality of vane elements 106, 107, 108, 109, 136, 137, 138, 139 are arranged on the first surface 104. The first surface 104 comprises a planar portion which is formed by a normal plane to the axis of rotation. The vane elements 106, 107, 108, 109, 136, 137, 138, 139 are mounted on support elements 111, 112, 113, 114, 141, 142, 143, 144 whereby at least some of the support elements are disposed with an axis extending in normal direction to the planar portion of the first surface. The vane elements 106, 107, 108, 109, 136, 137, 138, 139 are pivotable around the axis between a first radial position and a second, substantially tangential position.

Each of the vane elements 106, 107, 108, 109, 136, 137, 138, 139 has a first end 116, 117, 118, 119 and a second end 126, 127, 128, 129. The respective first ends and second ends of the inner circle of vane elements 136, 137, 138, 139 do not carry reference numbers as they are analogous to the first and second ends of vane elements 106, 107, 108, 109. The first end 116, 117, 118, 119 can be in contact with a fixing member 122, 123, 124, 125 for fixing the position of each of one of the vane elements 106, 107, 108, 109 to the corresponding support element 111, 112, 113, 114. Thus the stop or fixing member is provided to keep the second end 126, 127, 128, 129 in the second, substantially radial position under exertion of fluid pressure. For the vane elements 136, 137, 138, 139, similar fixing members are foreseen which do not carry reference numbers as not to overload the graphical representation. They are of an analogous configuration as the fixing members 122, 123, 124, 125.

The support elements 111, 112, 113, 114 are arranged in an annular area extending from the outer circumference of the base element having a radius r1 to a radius r2, whereby the ratio of r2/r1 is at least 0.5 and less than 1. The radius of the circle forming the circumference of the base element is thus r1. The radius r2 is the radius of the circle formed by the axes of the support elements 111, 112, 113, 114.

The support elements 141, 142, 143, 144 are arranged in an annular area extending from the circle formed by the fixing members 122, 123, 124, 125. The radius of this circle is named r11. The support elements 141, 142, 143, 144 are arranged in an annular area of the base element 103 which is defined as follows. The annular area has a maximum radius smaller than r11 and a minimum radius r12min. The numerical value for the radius r12 lies then between r11 and r12min, whereby the ratio of r12/r11 is at least 0.5 and less than 1. The minimum radius r12min corresponds to the radius of the bore for the shaft 102.

The fixing members 122, 123, 124, 125 are arranged on a circle having the radius r11 which is larger than the radius r12 of the circle formed by the support elements 141, 142, 143, 144.

The shaft 102 of the flow conversion device is connectable to a generator for the generation of electrical energy or to a transmission. According to an embodiment, the shaft 102 has an axis of rotation, which is substantially vertical. According to an alternative embodiment, the shaft 102 has an axis of rotation, which is substantially horizontal.

At least two series arrangements of vane elements are provided on the base element according to the second embodiment. Furthermore a plurality of vane elements can be arranged on the second surface 105. Thus either the first surface or the second surface or both of the first and second surfaces can be provided with a plurality of vane elements.

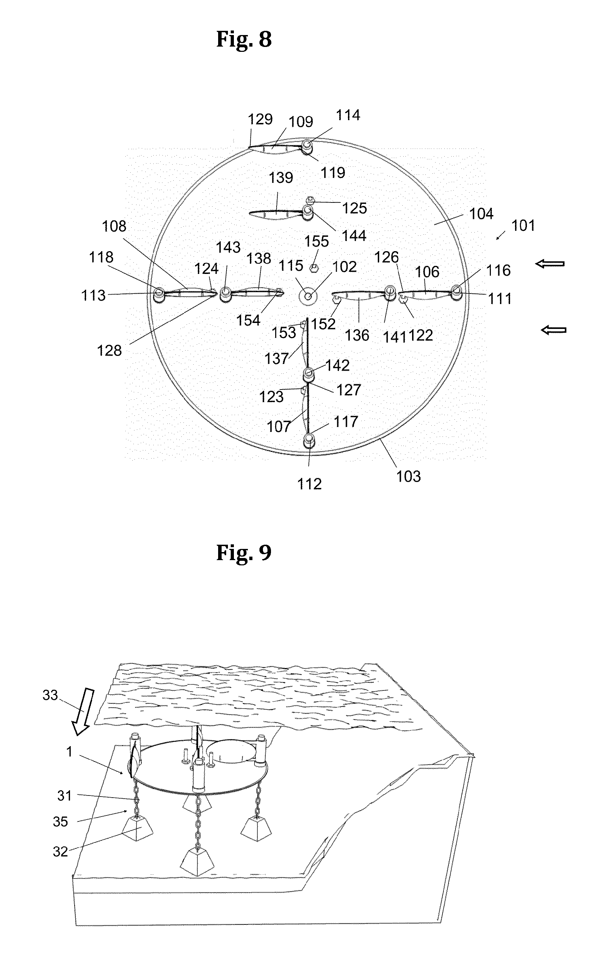

Fig. 8 shows the flow conversion device 101 in a view from above. In operation, the flow conversion device 101 is submerged in a gas or liquid flow. The fluid flow is represented by two arrows on the right side of Fig. 8. The vane element 106 and the vane element 136 are oriented in a radial arrangement that means, that a straight line connecting the first end 116 with the second end 126 is the same or parallel to the radial line connecting the support element with the axis 115. The vane elements 106, 136 are thus in a position in which the smallest surface thereof is exposed to fluid flow. The second end 126 of vane element 106 may touch the fixing member 122 or it may be still loose. The second end of vane element 136 may touch the fixing member 152 or it may be still loose. Thereby the vane elements 106, 136 present only a minimal resistance to fluid flow. The vane elements 106, 136 are in the upstream position. The vane elements 107, 137 are also oriented in a radial arrangement. The second end of vane element 107 is supported by the fixing member 123. The second end of vane element 137 is supported by its respective fixing member 153. In this position the largest possible surface of the vane elements 107, 137 are exposed to fluid flow. Thereby a pressure force is generated on vane elements 107, 137 which induces an angular momentum starting a rotational movement of the base element about the axis 115. The vane elements 108, 138 are also still in a radial arrangement. In this position, the smallest possible surface is exposed to fluid flow, thus only a small pressure force acts on the surface of vane elements 108, 138. The vane element 108 is shown with its second end 128 being still attached to the fixing member 154. The vane element 138 is shown with its second end being still attached to the fixing member 124. This position is referred to as the downstream position. As the base element 103 continues its clockwise rotation, a pressure force will act upon the convex surface of the vane elements 108, 138. Due to the fact that there is no fixing member on the concave side of the vane elements 108, 138 the vane elements 108, 138 will start a rotational movement about the respective support elements 113, 143 in clockwise direction. The vane elements 108, 138 move until they reach a stable position, which is a radial position in which the vane elements 108, 138 extend beyond the circumference of the base element 103. In this position the vane elements 108, 138 form a tail-like extension. The vane element 109, 139 float also freely in the fluid flow and assume a tangential position. This position is referred to as the return position. The vane elements 109, 139 remain in Fig. 8 horizontal position when rotated clockwise until they reach the upstream position again. Thus the support elements 114, 144 are exposed to fluid flow. The vane element 109 with its first end 119 and second end 129 extends downstream with respect to the support element 114. The vane element 139 with its first end and its second end extends downstream with respect to the support element 144. The fixing members 125 and 155 are in the return position free from any contact with any vane element. The flow conversion device according to any of the preceding embodiments can be used for the generation of electrical energy or for the performance of work, in particular mechanical work. The flow conversion device according to any of the preceding claims can be used in a toy or can be a toy.

Fig. 9 shows the flow conversion device 1 according to the first embodiment in operation. The flow conversion device 1 is submerged in a bed of flowing water, such as a river. Each of the base element, the vane elements, the support elements, the fixing members may have a lower specific volume than the liquid and/or may be hollow. The flow conversion device is anchored to the ground by an anchoring means 35. The anchoring means is in this example constituted of four chain elements 31 and a mass element 32. Due to the fact that all four chain elements and all four mass elements shown in Fig. 9 are of the same configuration, only one of them carries reference numbers. The arrow 33 on the left hand side shows the main direction of flow.

According an alternative embodiment not shown in the drawing a buoy may be attached to the flow conversion device, for instance to the housing containing the rotating shaft and the generator.

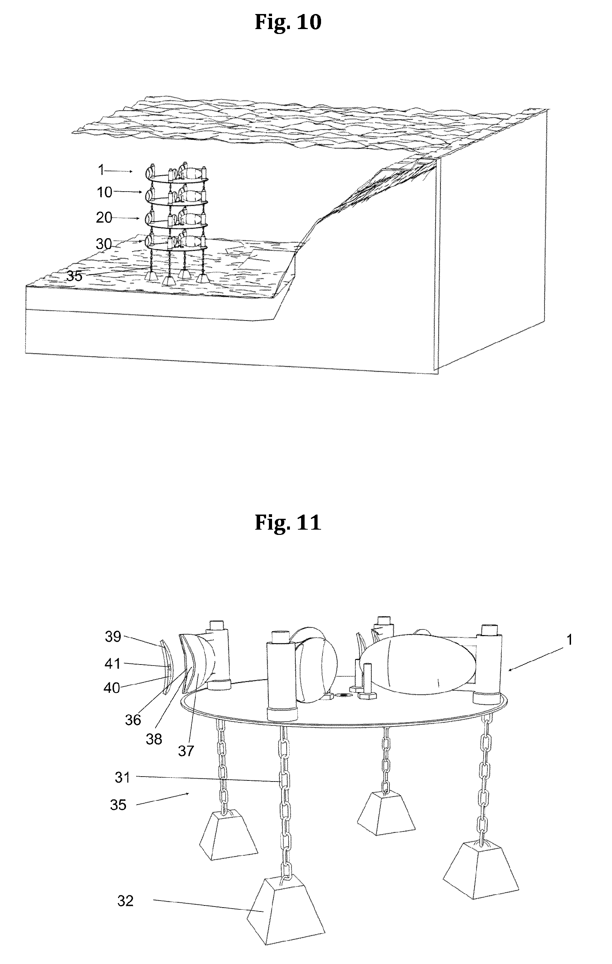

Fig. 10 shows a stack of flow conversion devices 1, 10, 20, 30. Each of the flow conversion devices can have a configuration according to any of the embodiments described in this application. Each of the flow conversion devices has according to the configuration shown in Fig. 10 a base element, a number of pivotable vane elements mounted on the base elements, support elements for each of the vane elements and fixing members. The flow conversion devices are coupled to each other so that their base elements rotate together. Thereby the pressure force is increased fourfold as compared to a flow conversion device according to the first embodiment. Therefrom results a larger annular momentum, which is transmitted to the shaft and which can be used to drive a more powerful device, such as an engine or a generator for generating electricity or a device for generating mechanical energy.

Again the flow conversion devices are manufactured from a material which has a lower specific weight than the fluid or which contains hollow spaces. The stack is fixed to the ground by an anchoring means 35.

Fig. 11 shows the flow conversion device 1 and its anchoring means 35. One of the vane elements of the flow conversion device 1 is cut. The vane element is composed of a shell, which is made of two thin-walled walls 36, 37. The space 38 between these walls is hollow and may be evacuated or filled with a gas lighter than the fluid surrounding the flow conversion device. The hollow space 38 can be reinforced by local reinforcement structures as pictured in a variant showing a first side wall 39, a second side wall 40 and a reinforcement baffle 41.

## Claims

1. A flow conversion device (1, 101) for generating power from a fluid flow comprising a shaft (2, 102), which is suitable for being positioned in the fluid flow, a base element (3, 103) attached to the shaft (2, 102) in such a manner that the shaft (2, 102) forms an axis of rotation (15, 115) for the base element (3, 103), whereby the base element (3, 103) comprises a first surface (4, 104) and a second surface (5, 105) arranged opposite to the first surface (4, 104), whereby a plurality of vane elements (6, 7, 8, 9, 106, 107, 108, 109, 136, 137, 138, 139) are arranged on the first surface (4, 104), whereby the first surface (4, 104) comprises a planar portion which is formed by a normal plane to the axis of rotation, whereby the vane elements (6, 7, 8, 9, 106, 107, 108, 109, 136, 137, 138, 139) are mounted on support elements (11, 12, 13, 14, 111, 112, 113, 114, 141, 142, 143, 144) whereby at least some of the support elements are disposed with an axis extending in normal direction to the planar portion of the first surface, **characterized in that** the vane elements are pivotable around the axis between a first radial position and a second, substantially tangential position.

2. The flow conversion device (1) of claim 1, whereby each of the vane elements (6, 7, 8, 9, 106, 107, 108, 109, 136, 137, 138, 139) has a first end (16, 17, 18, 19, 116, 117, 118, 119) and a second end (26, 27, 28, 29, 126, 127, 128, 129) whereby the first end comprises a fixing member (22, 23, 24, 25, 122, 123, 124, 125, 152, 153, 154, 155) for fixing the position of the vane element to the corresponding support element.

3. The flow conversion device (1) of claim 2, whereby the fixing member is provided to keep the second end (26, 27, 28, 29, 126, 127, 128, 129) in the second, substantially radial position under exertion of fluid pressure.

4. The flow conversion device (1, 101) according to any of the preceding claims, whereby the support elements are arranged in an annular area extending from the outer circumference of the base element having a radius r1 to a radius r2, whereby the ratio of r2/r1 is at least 0.5 and less than 1.

5. The flow conversion device (1) according to any of the preceding claims, whereby the fixing members are arranged in an annular area of the base element extending from a radius r3 forming the outer circumference of the shaft to a radius r4 being greater than r3 but less than r2.

6. The flow conversion device (101) according to any of the preceding claims 1 to 4, whereby the fixing members are arranged in an annular area of the base element are arranged having a radius r12 which lies then between r11 and r12min, whereby the ratio of r12/r11 is at least 0.5 and less than 1.

7. The flow conversion device (1, 101) according to any of the preceding claims, wherein the shaft (2, 102) is connectable to a generator for the generation of electrical energy.

8. The flow conversion device (1, 101) according to any of the preceding claims, wherein the shaft (2, 102) is connectable to a transmission.

9. The flow conversion device (1, 101) according to any one of the preceding claims, wherein the shaft (2, 102) has an axis of rotation (15, 115), which is substantially vertical.

10. The flow conversion device according to any one of the preceding claims,
wherein the shaft (2, 102) has an axis of rotation (15, 115), which is substantially horizontal.

11. The flow conversion device (1, 101) according to any one of the preceding claims, wherein at least two vane elements are provided on the base element.

12. The flow conversion device (1, 101) according to any one of the preceding claims, whereby a plurality of vane elements is arranged on the second surface (5, 105).

13. The flow conversion device (1, 101) according to any one of the preceding claims, whereby a plurality of vane elements is arranged radially in serial arrangement.

14. The flow conversion device (1, 101) according to any one of the preceding claims, wherein at least some of the vane elements are hollow or contain hollow spaces.

15. System including a flow conversion device (1, 101) according to any one of the preceding claims, wherein an anchoring means (35) is provided for fixing flow conversion device (1, 101) to the ground.

16. Use of the flow conversion device (1) according to any of the preceding claims in for the generation of electrical energy.

17. Use of the flow conversion device (1) according to any of the preceding claims in for the performance of work.

18. Use of the flow conversion device (1) according to any of the preceding claims in a toy.

19. A method for operating a flow conversion device (1, 101) arranged in a fluid flow whereby in a first step a rotary movement of a shaft (2, 102) is initiated by rotation of a base element (3, 103) attached to the shaft (2, 102) around an axis of rotation (15, 115) extending through the shaft, whereby the base element (3, 103) comprises a first surface (4, 104) and a second surface (5, 105) arranged opposite to the first surface (4, 104), whereby a plurality of vane elements (6, 7, 8, 9, 106, 107, 108, 109, 136, 137, 138, 139) are arranged on the first surface (4, 104), whereby the first surface (4, 104) comprises a planar portion which is formed by a normal plane to the axis of rotation, whereby the vane elements are mounted on support elements (11, 12, 13, 14, 111, 112, 113, 114, 141, 142, 143, 144), whereby at least some of the support elements are disposed with an axis extending in normal direction to the planar portion of the first surface, **characterized in that** in a second step, the vane element (6, 106, 136) is pivoted around the axis from a first radial position and a second, substantially tangential position at latest when it reaches a downstream position in the fluid flow, and in a third step the vane element (8, 108, 138) is pivoted around the axis of the support element (13, 113, 143) from a second, substantially tangential position to a first radial position at latest when it reaches an upstream position in the fluid flow.
